# EUROPEAN PATENT APPLICATION

(11) **EP 2 562 913 A2**
(43) Date of publication of application: **27.02.2013**
(21) Application number: 12180059.3
(22) Date of filing: 10.08.2012
(51) Int. Cl.: H02K 1/27

(54) **Interior permanent magnet motor**

(30) Priority: 21.08.2011 JP 2011180032
(71) Applicant: KABUSHIKI KAISHA TOYOTA JIDOSHOKKI, Kariya-shi, Aichi-ken 448-8671 (JP)
(72) Inventor: Kagami, Masanao, Aichi-ken, 448-8671 (JP); Nakane, Yoshiyuki, Aichi-ken, 448-8671 (JP); Umeyama, Ryo, Aichi-ken, 448-8671 (JP); Mitsuda, Satoru, Aichi-ken, 448-8671 (JP); Suzuki, Noriyuki, Aichi-ken, 448-8671 (JP)
(74) Representative: HOFFMANN EITLE

(57) **Abstract**

An interior permanent magnet motor includes a rotor and a stator. The rotor includes a rotor core. The rotor core is formed by laminating steel plates each including pairs of magnet insertion holes and pairs of cutouts. Each pair of magnet insertion holes includes two magnet insertion holes that are arranged in a V-shape, the wide end of which is relatively closer to the outer edge with a support portion located in between. Each pair of cutouts is formed at q-axis ends of the corresponding magnet insertion holes, and includes two cutouts connected to the outer edge of the rotor core. In a state where the permanent magnets are inserted in the magnet insertion holes, a gap is formed at a d-axis end of each magnet insertion hole.

## Description

### BACKGROUND OF THE INVENTION

The present invention relates to an interior permanent magnet motor including permanent magnets embedded in a rotor.

Japanese Laid-Open Patent Publication No. 2011-4480 discloses an invention that provides an interior permanent magnet motor that ensures the strength and improves magnetic property. Permanent magnets, which form poles, are embedded in the rotor disclosed in the above publication. Two permanent magnets correspond to a single pole. The permanent magnets are arranged to form a V-shape, the widest part of which is relatively closer to the outside of the rotor. Also, the rotor for embedding the permanent magnets is formed by alternately laminating two kinds of steel plates (first and second lamination steel plates) having different structures.

That is, each first lamination steel plate includes first retaining holes, first cavities, and second cavities corresponding to the poles. Two first retaining holes retaining two permanent magnets, two first cavities arranged between the two first retaining holes, and two second cavities, which are arranged between the two permanent magnets and another two permanent magnets arranged adjacent to the two permanent magnets, correspond to a single pole. Each second lamination steel plate includes second retaining holes, third cavities, and cutout portions corresponding to the poles. Two second retaining holes retaining two permanent magnets, two third cavities arranged between the two second retaining holes, and two cutout portions, which are arranged to overlap the second cavities of the first lamination steel plates and connected to the outer edge of the rotor, correspond to a single pole. An iron core of the rotor is formed by alternately laminating the first lamination steel plates and the second lamination steel plates.

Japanese Laid-Open Patent Publication No. 2004-104962 discloses an invention that prevents reduction in the output caused by magnetic flux leakage of permanent magnets. According to the rotor of the ninth and tenth embodiments disclosed in the above publication, the third cavities of the second lamination steel plates in Japanese Laid-Open Patent Publication No. 2011-4480 are filled with permanent magnets.

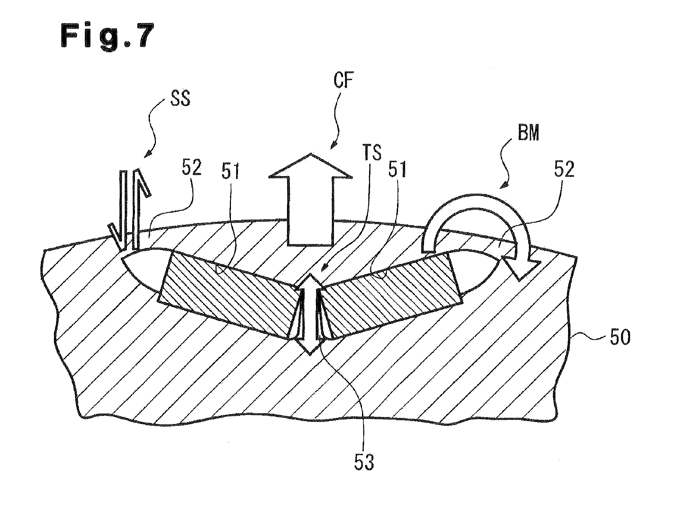

According to the apparatus of Japanese Laid-Open Patent Publication No. 2011-4480, outer edge support portions are formed on each of the first lamination steel plates between the second cavities and the outer edge of the rotor to ensure the strength. Center support portions are also provided between the first cavities. During rotation, a centrifugal force CF acts in the zones sandwiched between first retaining holes 51 of first lamination steel plates 50 forming the rotor, a shear stress SS acts on outer edge support portions 52, and a tensile stress TS acts on center support portions 53 as shown in Fig. 7. Since a ferrous material is weak against shear stress, the outer edge support portions 52 break more easily as compared to the center support portions 53. Also, a bending moment BM also acts on the outer edge support portions 52. In this term also, the outer edge support portions 52 break more easily as compared to the center support portions 53. If the outer edge support portions 52 break during rotation, the broken pieces of the first lamination steel plates 50 are stirred at high speed inside the motor. This might lead to a breakdown of the motor. That is, the outer edge support portions 52 provided in the rotor to improve the mechanical performance might deteriorate the mechanical performance. However, if the outer edge support portions 52 are formed to be thicker to prevent breaking, the size of the rotor is increased and the costs are increased.

Also, the rotor disclosed in Japanese Laid-Open Patent Publication No. 2011-4480 is formed by alternately laminating the first lamination steel plates and the second lamination steel plates, which have different structures. Therefore, manufacturing process of the rotor is complicated, and the size is inevitably increased due to the structure of the first lamination steel plates. This undesirably increases the costs.

In the apparatus of Japanese Laid-Open Patent Publication No. 2004-104962, since the third cavities of the Japanese Laid-Open Patent Publication No. 2011-4480 do not exist, the magnetic flux leakage at the center support portions is great. As a result, the output of the permanent magnets per unit area is decreased as compared to the case in which the third cavities are added to the first retaining holes having the same size. In the automotive field in recent years, expensive neodymium magnets have been often employed as the permanent magnets. Thus, reduction in the output of the permanent magnets per unit area is a problem in terms of costs.

### SUMMARY OF THE INVENTION

Accordingly, it is an objective of the present invention to improve mechanical property while reducing magnetic flux leakage in a rotor and reducing manufacturing costs.

To achieve the foregoing objective and in accordance with one aspect of the present invention, an interior permanent magnet motor is provided that includes a rotor including a rotor core having an outer edge, a plurality of pairs of permanent magnets embedded in the pairs of magnet insertion holes, and a stator around which a coil is wound. The rotor core are formed by laminating steel plates each including a plurality of pairs of magnet insertion holes. Each pair of magnet insertion holes is formed of two magnet insertion holes arranged in a V-shape, a wide end of which is relatively closer to the outer edge of the rotor core. Each pair of permanent magnets is formed of two plate-like permanent magnets arranged in the V-shape and such that corresponding poles face each other. Each magnet insertion hole includes a d-axis end located in the vicinity of a d-axis, and a q-axis end located in the vicinity of a q-axis. The rotor core is formed by laminating only the steel plates in which the q-axis ends of all the magnet insertion holes are connected to the outer edge of the rotor core by cutouts. When the permanent magnets are inserted in the magnet insertion holes, a gap is formed at the d-axis end of each magnet insertion hole.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a side view illustrating a rotor and a stator of an electric motor according to a first embodiment of the present invention;
Fig. 2 is a partially enlarged view of the rotor of Fig. 1;
Fig. 3 is a partially enlarged view of the steel plate forming the rotor core;
Fig. 4 is a partially enlarged view illustrating a lamination structure of the rotor core;
Fig. 5 is a partially enlarged view illustrating a rotor according to a second embodiment of the present invention;
Fig. 6 is a partially enlarged view illustrating a rotor according to a third embodiment of the present invention; and
Fig. 7 is a partial cross-sectional view illustrating a conventional rotor core.

### DETAILED DESCRIPTION OF THE PREFERRED EMBODIMENTS

### (First Embodiment)

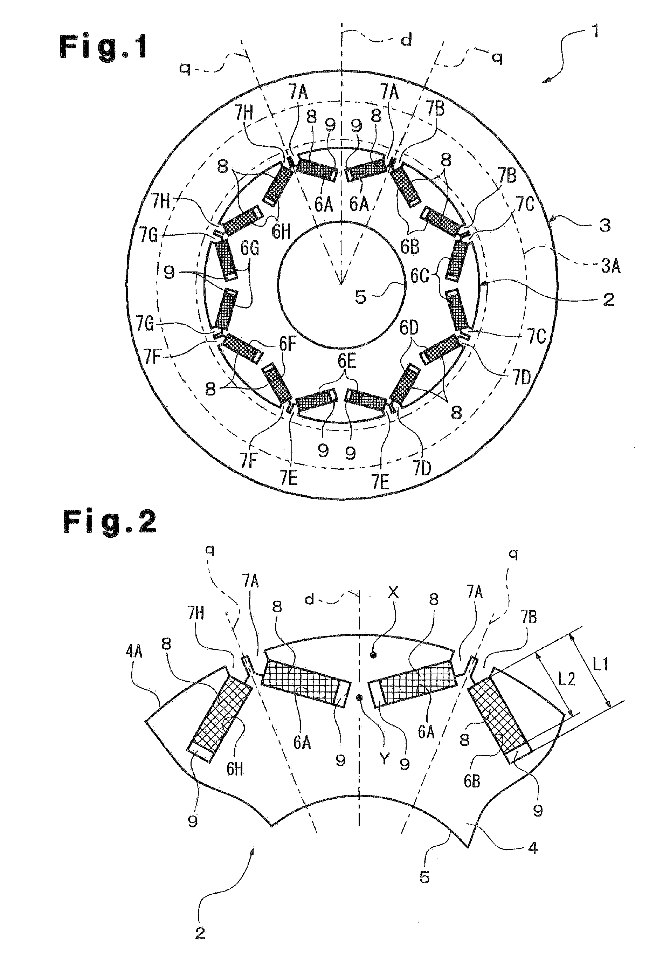

An interior permanent magnet motor according to a first embodiment of the present invention will now be described. The interior permanent magnet motor is mounted on a vehicle. The first embodiment will be described with reference to Figs. 1 to 4.

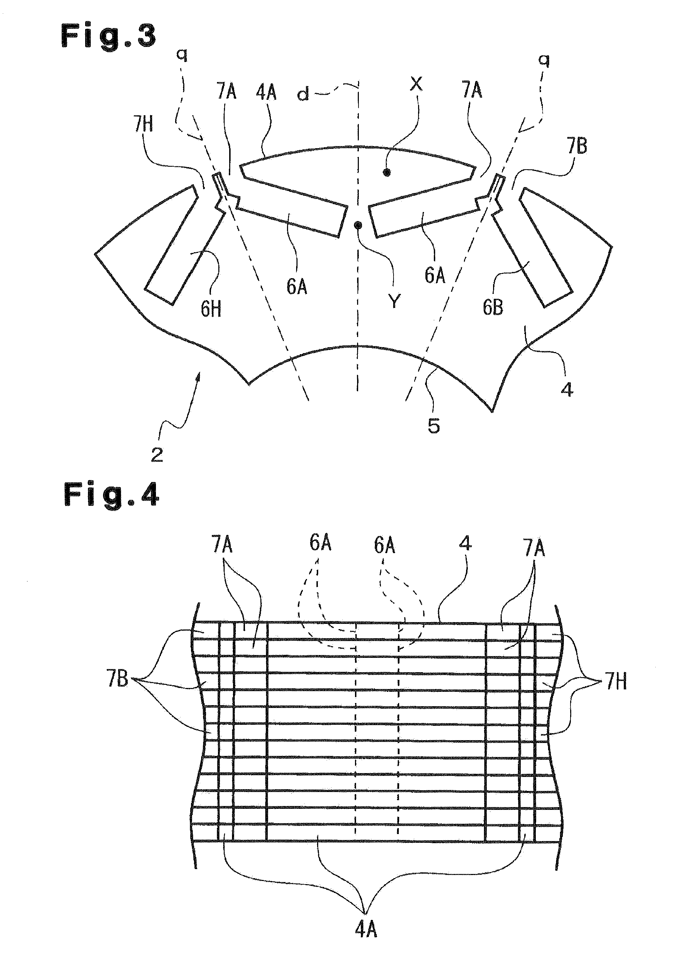

As shown in Fig. 1, an interior permanent magnet motor 1 includes a rotor 2 and a stator 3, which is arranged on the outer circumference of the rotor 2. A rotor core 4, which forms the rotor 2, is constituted by lamination steel plates made of magnetic bodies (see Fig. 4). Also, a rotary shaft (not shown) is inserted in a shaft hole 5 formed at the center of the rotor core 4, and the rotary shaft is secured to the rotor core 4 by suitable means such as press fitting and adhesive bonding. A coil 3A is wound about the stator 3.

As shown in Fig. 3, two magnet insertion holes 6A are arranged in each of the steel plates forming the rotor core 4. The two magnet insertion holes 6A are arranged to form a V-shape, the wide end of which is relatively closer to an outer edge 4A of the steel plate; that is, the V-shape forms an arrowhead that points radially toward the center of the rotor when viewed axially. Two cutouts 7A are formed in the two magnet insertion holes 6A arranged in the V-shape at the positions that are close to the outer edge 4A and correspond to q-axis ends, which will be described below. The cutouts 7A are connected to the outer edge 4A of the steel plate. Each of the cutouts 7A extends from the corresponding magnet insertion hole 6A and inclines toward the outer edge 4A with respect to the direction in which the magnet insertion hole 6A extends. In other words, each cutout 7A extends radially outward from the associated magnet insertion hole 6A. Also, the cutouts 7A extend along q-axes, that is, in the radial direction.

The two magnet insertion holes 6A and the two cutouts 7A form a pair. As shown in Fig. 1, eight pairs of magnet insertion holes and cutouts, which have the same structure as the pair of magnet insertion holes 6A and the cutouts 7A, are formed in the steel plates to be equally spaced along the circumferential direction. In Fig. 1, the eight pairs of magnet insertion holes are denoted by 6A to 6H, and the eight pairs of cutouts are denoted by 7A to 7H. Therefore, the rotor core 4 is formed by lamination steel plates having the same structure in which the eight pairs of magnet insertion holes 6A to 6H and the cutouts 7A to 7H are formed (see Fig. 4).

Flat plate-like permanent magnets 8 formed of rare-earth magnets such as neodymium magnets are inserted and embedded in the pairs of magnet insertion holes 6A to 6H such that the same poles face each other in each pair. Two permanent magnets 8 embedded in each pair of magnet insertion holes 6A correspond to a single pole. Eight pairs of permanent magnets 8 are embedded in the rotor core 4, and permanent magnets corresponding to eight poles are formed. The permanent magnets 8 do not need to be rare-earth magnets, but may be other magnets such as alloy magnets and ferrite magnets. Also, the permanent magnets 8 may be plates having a curved cross-section in the direction of the rotary shaft. In this interior permanent magnet motor, d-axes and q-axes are set as shown in Figs. 1 to 3.

Since the permanent magnets 8 having the same poles are arranged in the V-shape, a core area X surrounded by the pair of magnet insertion holes 6A, the cutouts 7A, and the outer edge 4A of the steel plate is increased. Thus, the magnet torque is increased. Also, since the pair of cutouts 7A is formed by extending the pair of magnet insertion holes 6A, magnetic flux leakage between the pair of permanent magnets 8 and the adjacent permanent magnets 8 having a different magnetic pole is inhibited. Furthermore, the pair of cutouts 7A is connected to the outer edge 4A of the steel plate such that the cutouts 7A incline toward the outer edge with respect to the direction in which the corresponding magnet insertion holes 6A extends. Therefore, the size of the core area X is minimized as compared to the structure in which the pair of cutouts 7A is formed on straight extended lines of the corresponding magnet insertion holes 6A. Therefore, the centrifugal force of the core area X is reduced, and stress applied to a support portion Y, which will be discussed below, is further reduced.

The core area X partitioned by forming each pair of the cutouts 7A to 7H is supported by a support portion Y, which is the core area located between the corresponding pair of magnet insertion holes 6A to 6H. Thus, concentration of stress occurs at each support portion Y by the load associated with the centrifugal force applied to the corresponding core area X when the rotor 2 is rotated. Therefore, the support portions Y are formed to have an area with a certain width in the rotation direction of the rotor 2 that can cope with the concentration of stress.

In general, if the width of the support portions Y is increased, short circuit of magnetic flux between each pair of permanent magnets 8 more easily occurs, and magnetic flux leakage is increased. In the present embodiment, the length L1 of the pair of magnet insertion holes 6A is set relatively longer than the length L2 of the pair of permanent magnets 8. Thus, gaps 9 are formed between the pair of permanent magnets 8 embedded in the pair of magnet insertion holes 6A and the support portion Y. That is, the gaps 9 are located at the ends of the magnet insertion holes 6A close to the d-axis. The gaps 9 inhibit short-circuit of the magnetic flux between the pair of permanent magnets 8, and reduces the magnetic flux leakage. Therefore, since the output of the permanent magnets 8 per unit cross-sectional area is increased by reducing the magnetic flux leakage, even if the volume of the permanent magnets 8 is reduced, the interior permanent magnet motor 1 is efficiently operated. In this description, the lengths L1, L2 of the pair of magnet insertion holes 6A and the pair of permanent magnets 8 refer to the lengths along the directions in which the pair of magnet insertion holes 6A and the pair of permanent magnets 8 extend. The gaps 9 are also formed between other pairs of magnet insertion holes 6B to 6H in the same manner as in the case of the pair of magnet insertion holes 6A.

### (Second Embodiment)

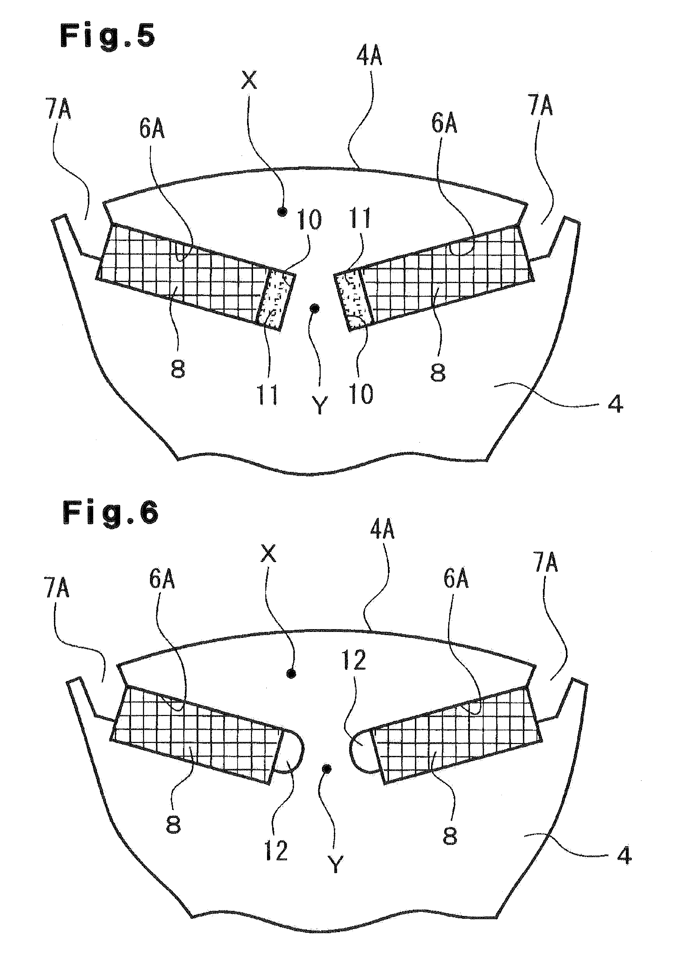

In a second embodiment, the structure of the gaps 9 of the first embodiment is modified as shown in Fig. 5. Like or the same reference numerals are given to those components that are like or the same as the corresponding components of the first embodiment and detailed explanations are omitted. The shape of a gap 10 according to the second embodiment is formed by extending each magnet insertion hole 6A like the first embodiment, but the gap 10 is filled with plastic 11. The plastic 11 inhibits short-circuit of magnetic flux between the pair of permanent magnets 8, reduces magnetic flux leakage, and functions to secure the permanent magnets 8 to the magnet insertion holes 6A.

### (Third Embodiment)

As shown in Fig. 6, in a third embodiment, the shape of the gaps 9 of the first embodiment is modified. Like or the same reference numerals are given to those components that are like or the same as the corresponding components of the first embodiment and detailed explanations are omitted. The width of a gap 12 of the third embodiment is set smaller than the width of the magnet insertion hole 6A. Therefore, an inner wall surface that abuts against the end of the permanent magnet 8 is formed at the end of the magnet insertion hole 6A close to the d-axis. In this description, the widths of the magnet insertion hole 6A and the gap 12 refer to dimensions measured in a direction orthogonal to the length L1 (orthogonal to the longitudinal direction) of the magnet insertion hole 6A (Fig. 2) as viewed in an axial direction (that is, as viewed in Fig. 6).

In the third embodiment, the cross-sectional area of the gap 12 is slightly smaller than the cross-sectional area of the gap 9 of the first embodiment, but the magnetic flux leakage of the rotor and the manufacturing costs are sufficiently reduced. Also, since the end surface of the permanent magnet 8 facing the gap 12 is brought into contact with part of the steel plates, that is, the inner wall surface of the magnet insertion hole 6A, the position of the permanent magnet 8 is determined.

Each gap 12 shown in Fig. 6 is provided at a position displaced to be closer to the core area X of the steel plate with respect to the short side of the magnet insertion hole 6A, but may be displaced in the opposite direction from the core area X, that is, to separate from the core area X. Also, part of the wall surface of the gap 12 is formed by a curved surface, but the entire wall surface may be formed by straight walls.

Therefore, the present examples and embodiments are to be considered as illustrative and not restrictive and the invention is not to be limited to the details given herein, but may be modified within the scope and equivalence of the appended claims.

## Claims

1. An interior permanent magnet motor, comprising:
a rotor (2) including a rotor core (4) having an outer edge (4A), the rotor core (4) being formed by laminating steel plates each including a plurality of pairs of magnet insertion holes (6A-6H), each pair of magnet insertion holes (6A-6H) is formed of two magnet insertion holes (6A-6H) arranged in a V-shape, a wide end of which is relatively closer to the outer edge (4A) of the rotor core (4);
a plurality of pairs of permanent magnets (8) embedded in the pairs of magnet insertion holes (6A-6H), each pair of permanent magnets (8) is formed of two plate-like permanent magnets (8) arranged in the V-shape and such that corresponding poles face each other; and
a stator (3) around which a coil is wound,
the interior permanent magnet motor being **characterized in that**
each magnet insertion hole (6A-6H) includes a d-axis end located in the vicinity of a d-axis, and a q-axis end located in the vicinity of a q-axis,
the rotor core (4) is formed by laminating only the steel plates in which the q-axis ends of all the magnet insertion holes (6A-6H) are connected to the outer edge (4A) of the rotor core (4) by cutouts (7A-7H), and
when the permanent magnets (8) are inserted in the magnet insertion holes (6A-6H), a gap (9; 10; 12) is formed at the d-axis end of each magnet insertion hole (6A-6H).

2. The interior permanent magnet motor according to claim 1, **characterized in that** each cutout (7A-7H) extends from the corresponding magnet insertion hole (6A-6H) and inclines toward the outer edge (4A) with respect to the direction in which the associated magnet insertion hole (6A-6H) extends, and each cutout (7A-7H) is connected to the outer edge (4A) of the steel plate.

3. The interior permanent magnet motor according to claim 2, **characterized in that** each cutout (7A-7H) extends along the associated q-axis.

4. The interior permanent magnet motor according to claim 1 or 2, **characterized in that** each gap (10) is filled with plastic (11).

5. The interior permanent magnet motor according to claim 1 or 2, **characterized in that** the width of each gap (12) is less than the width of the corresponding magnet insertion hole (6A-6H) in a direction orthogonal to the direction in which the magnet insertion hole (6A-6H) extends, and an inner wall surface, which abuts against the corresponding permanent magnet (8), is formed at the d-axis end of each magnet insertion hole (6A-6H).

6. The interior permanent magnet motor according to claim 5, **characterized in that** each gap (12) is displaced to a position closer to the outer edge (4A) in a direction orthogonal to the direction in which the corresponding magnet insertion hole (6A-6H) extends.
